# EUROPÄISCHE PATENTANMELDUNG

(11) **EP 2 048 026 A1**
(43) Veröffentlichungstag der Anmeldung: **15.04.2009**
(21) Anmeldenummer: 08017523.5
(22) Anmeldetag: 07.10.2008
(51) Int. Cl.: B60P 3/20, B60P 7/08, B62D 63/06, B64F 1/32

(54) **Luft-Cargo-Transportgerät**

(30) Priorität: 09.10.2007 DE 102007048466
(71) Anmelder: Viessmann Kältetechnik AG, 95030 Hof (DE)
(72) Erfinder: Gebelein, Bernd, 95179 Geroldsgründ (DE)
(74) Vertreter: Wolf, Günter

(57) **Zusammenfassung**

Die Erfindung betrifft ein Luft-Cargo-Transportgerät zur Aufnahme von Transportcontainern (TC), umfassend ein wärmeisoliertes, verfahrbares Gehäuse (1), das zwischen einer Boden-(2) und einer Deckenfläche (3) Seitenwände (4) aufweist, von denen mindestens eine in Form eines Öffnungsverschlusses (5) ausgebildet ist, wobei die Bodenfläche (2) mit an die in das Gehäuse (1) eingebrachten Transportcontainern (TC) anschlagbaren und festsetzbaren Fixierungsanschlägen (6) versehen ist.
Nach der Erfindung sind en Fixierungsanschlägen (6) Stellungssensoren (7) stationär in der Bodenfläche (2) zugeordnet sind, wobei die Stellungssensoren (7) mit einer Verarbeitungselektronik (9) verschaltet sind, mit der vorzugsweise in Kombination mindestens auch noch so genannte Positionsstrahler (8) in der Deckenfläche (3) des Gehäuses (1) verschlatet werden.

## Beschreibung

Die Erfindung betrifft ein Luft-Cargo-Transportgerät gemäß Oberbegriff des Patentanspruches 1.

Derartige Luft-Cargo-Transportgeräte, an denen der Oberbegriff orientiert ist, sind allgemein bekannt und in Benutzung, wobei bzgl. der speziellen Maßgabe, dass die Bodenfläche mit an die in das Gehäuse eingebrachten Transportcontainern anschlagbaren und festsetzbaren Fixierungsanschlägen versehen ist, kein direkter druckschriftlicher Nachweis erbracht werden kann. Bei diesen Anschlägen in solchen Luft-Cargo-Transportgeräten, die auf Flughäfen zur Be- und Entladung kleinerer Luftgepäck-Container in und aus Flugzeugen dienen, handelt es sich nämlich in der Praxis um in die Tragstruktur der Bodenfläche des Gehäuses einbezogene, zapfenartige Anschläge, die aus einer nicht wirksamen Position zum jeweils ins Gehäuse eingebrachten Transportcontainer in eine Sperrpostion wirksam per Hand aufrichtbar und in dieser Position blockierbar ausgebildet sind. Ohne solche Fixieranschläge ist bspw. ein einschlägiges Transportgerät nach der US 7,043,932 bekannt, worauf der Vollständigkeit hingewiesen sei, d.h., dieses Gerät umfasst ein wärmeisoliertes, verfahrbares Gehäuse in Form eines Kubus mit einem Öffnungsverschluss. Das Gehäuse weist dabei zwischen einer Boden- und einer Deckenfläche Seitenwände auf, von denen eine (hier die Rückwand) in Form eines Öffnungsverschlusses ausgebildet ist. Solche Fixierungsanschläge im weiteren Sinne finden jedoch auch Anwendung gemäß der DE 198 51 246 im Eisenbahnbereich, dort allerdings in Form höhenbeweglicher Aufsetzzapfen in Verbindung mit Zapfenpositionssensoren zur Fernerkennung der Auflage von von oben her auf Eisenbahntragwagen aufzusetzenden Großcontainern. Die in Verbindung mit Luft-Cargo-Transportgeräten der hier interessierenden und vorerwähnten Fixierungsanschläge haben sich bei derartigen Geräten als zweckmäßig erwiesen, weil ohne solche Anschläge, die beim schiebenden Be- und Entladen der Transportcontainer nicht im Wege stehen dürfen, die Gefahr besteht, dass die Container insbesondere bei ruckartigem Anfahren verrutschen, sich gegenseitig oder die Wände des Gehäuses und insbesondere auch einen in der Regel rückseitig am Gehäuse angeordneten Öffnungsverschluß beschädigen können.

Ausgehend von einem Transportgerät der eingangs genannten Art, d.h., einem solchen mit Fixierungsanschlägen, liegt der Erfindung die Aufgabe zugrunde, das Transportgerät dahingehend zu verbessern, mit einfachen Mitteln sicherzustellen, dass nach einer Beladung mit Transportcontainern deren Fixierung auf einfache Weise kontrollierbar vollzogen und sichergestellt ist.

Diese Aufgabe ist an einem Transportgerät der eingangs genannten Art nach der Erfindung durch die im Kennzeichen des unabhängigen Patentanspruches 1 angeführten Merkmale gelöst.
Vorteilhafte Weiterbildungen ergeben sich nach den abhängigen Patentansprüchen.

Es ist also mit anderen Worten via Verarbeitungselektronik letztlich abfragbar, ob die für einen eingebrachten Luft-Cargo-Transportcontainer zu dessen Festlegung notwendige Anzahl von Fixierungsanschlägen tatsächlich in Stellung gebracht worden sind. Für die Abfragbarkeit sorgt dabei ein mit der Verarbeitungselektronik verschaltetes Display. Abgesehen davon, dass es Transportcontainer gibt, die standardisiert den gesamten oder nur die Hälfte des Innenraum des Gerätegehäuses mit der Folge einnehmen, dass nur ein Teil der Fixierungsanschläge in Wirkstellung zu bringen ist, tritt aber weitaus häufiger der Fall auf, dass eine Mehrzahl von kleineren Transportcontainern in das Gehäuse des Transportgerätes einzubringen ist.

Mit Rücksicht darauf ist demgemäß eine Weiterbildung derart vorgesehen, dass innen an der Deckenfläche des Gehäuses gegen dessen Bodenfläche gerichtete Positionsstrahler angeordnet und diese ebenfalls mit der Verarbeitungselektronik verschaltet sind. Für solche Positionsstrahler kommen bspw. Infrarotstrahler in Betracht, die also der Verarbeitungselektronik die Information liefern, wieviel Transportconainer überhaupt zu berücksichtigen und wo zu lokalisieren sind, wobei dann in der Verabeitungselektronik der jeweilige Bezug zu den tatsächlich betroffenen Fixierungsanschlägen hergestellt wird.

Abgesehen von der erfindungsgemäßen Kombination aus Stellungssensoren und Positionsstrahlern bestehen vorteilhafte Weiterbildungen in Folgendem:

Die Verarbeitungselektronik ist in einem außen am Gehäuse befindlichen Anzeigegerät angeordnet, das mit einen mit der Verarbeitungselektronik verbundenen Display versehen ist, der zusammengefasst die Ablesung der Beladung und deren ordnungsgemäße Festlegung im Gehäuse ermöglicht.

Die Bodenfläche ist durch die Anordnung der Stellungssektoren und die der Positionsstrahler in Aufstellsektoren gegliedert, d.h., sowohl die Fixierungsanschläge mit den ihnen zugeordneten Stellungssensoren als auch die Positionsstrahler an der Deckenfläche definieren jeweils die Sektoren. Das Display ist mit einer der Anzahl der Fixierungsanschläge entsprechenden Anzahl von Anzeigefeldern versehen, wodurch bspw. ein nicht ordnungsgemäß gesperrter Fixierungsanschlag erkennbar ist.

Da solche Transportgeräte häufig auch mit in den Transportcontainern enthaltenen temperaturempfindlichen Produkten beladen werden und mit Rücksicht darauf mit einem Temperieraggregat ausgestattet sind, ist dieses vorteilhaft ebenfalls mit der Verarbeitungselektronik und über diese mit dem Display verschaltet.

Von Interesse ist im Gesamtzusammenhang auch eine Kontrolle des ordnungsgemäßen Öffnungsverschlusses, d.h., dafür ist das Gehäuse des Gerätes im Bereich des mindestens einen Öffnungsverschlusses mit einem Schließtellungssensor versehen, der via Verarbeitungselektronik ebenfalls mit dem Display verschaltet ist.

Das erfindungsgemäße Transportgerät wird anhand der zeichnerischen Darstellung von Ausführungsbeispielen nachfolgend näher erläutert.

Es zeigt
- Figur 1: perspektivisch ein Ausführungsbeispiel des Transportgerätes;
- Figur 2: vergrößert einen Blick in den Innenraum des Gehäuses;
- Figur 3: perspektivisch einen Ansichtsausschnitt aus der Bodenkonstruktion des Gehäuses;
- Figur 4: schematisch und zusammengefasst die Boden- und Deckenfläche des Gehäuses und
- Figur 5: in Draufsicht das Ausführungsbeispiel eines Displays.

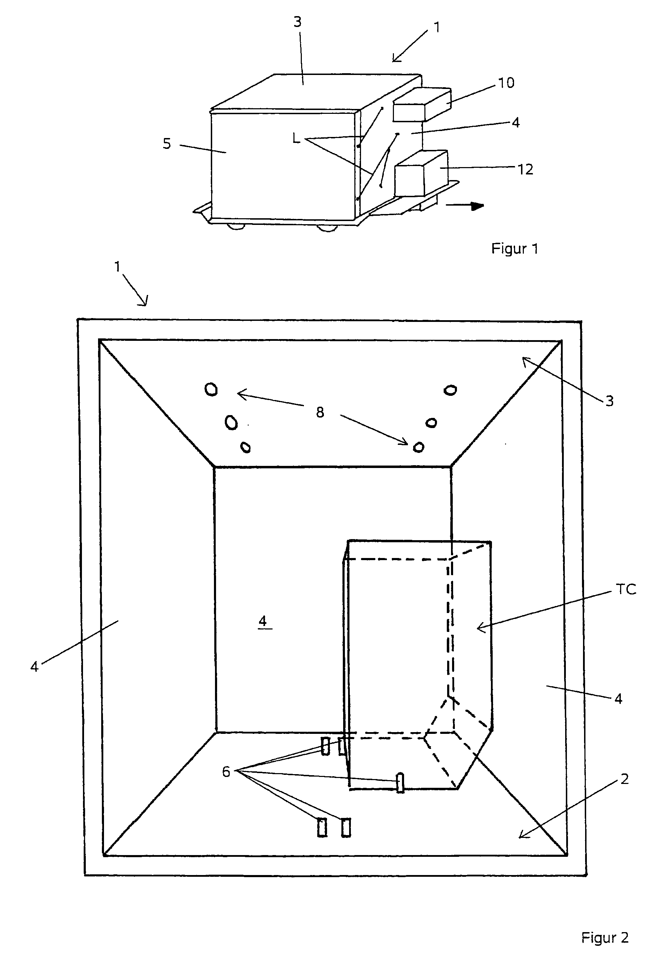

Unter Verweis auf Figur 1 besteht das Luft-Cargo-Transportgerät zur Aufnahme von Transportcontainern TC aus einem wärmeisolierten, verfahrbaren Gehäuse 1, das zwischen einer Boden-2 und einer Deckenfläche 3 Seitenwände 4 aufweist, von denen mindestens eine in Form eines Öffnungsverschlusses 5 ausgebildet ist. Die Bodenfläche 2 ist dabei mit an die in das Gehäuse 1 einzubringenden Transportcontainern TC anschlagbaren und festsetzbaren Fixierungsanschlägen 6 versehen. Beim in Figur 2 dargestellten Transportcontainer TC handelt es sich um einen typischen Behälter wie er in Flugzeugen zur Verladung kommt.

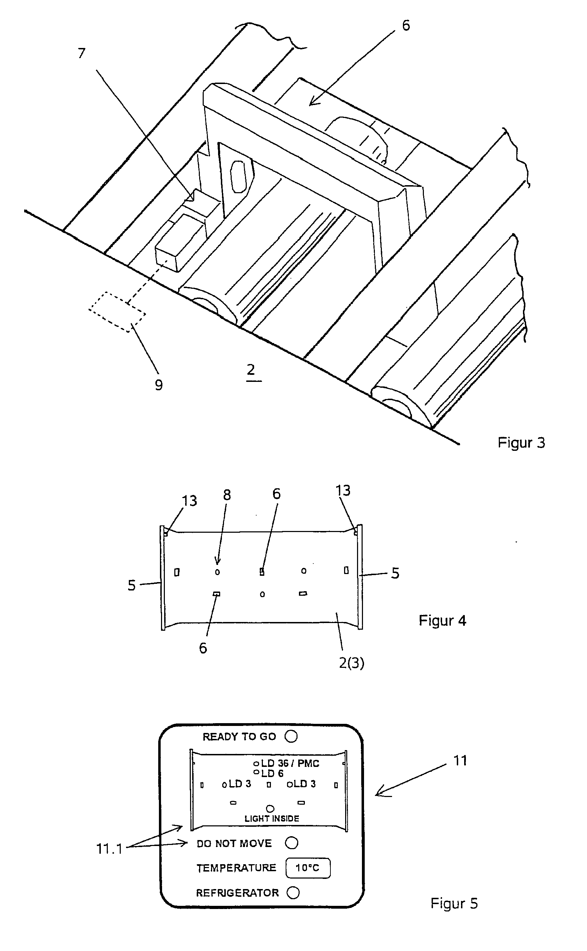

Für ein derartiges Gerät ist nun wesentlich, dass den Fixierungsanschlägen 6 Stellungssensoren 7 stationär in der Bodenfläche 2 zugeordnet sind, wobei die Stellungssensoren 7 mit einer Verarbeitungselektronik 9 verschaltet sind, die in Figur 3 nur schematisch und gestrichelt angedeutet ist. Die Figur 3 stellt übrigens nur einen kleinen Ausschnitt der Bodenkonstruktion des Gehäuses 1 dar, und zwar mit in Anschlagstellung aufgerichtetem Fixierungsanschlag 6, der vor einer Beladung in die Ebene der Bodenfläche eingeschwenkt ist. Von diesen Anschlägen 6 sind in Figure 2 nur einige der Vollständigkeit halber angedeutet.
Unter Verweis auf Figure 2 sind außerdem innen an der Deckenfläche 3 gegen die Bodenfläche 2 des Gehäuses 1 gerichtete, hier sogenannte Positionsstrahler 8 angeordnet, die ebenfalls mit der Verarbeitungselektronik 9 verschaltet sind.

Die vorerwähnte Verarbeitungselektronik 9 ist in einem außen am Gehäuse 1 befindlichen Anzeigegerät 10 untergebracht, das mit einem mit der Verarbeitungselektronik 9 verbundenen Display 11 versehen ist, zu dem auf Figure 5 verwiesen wird, in der sich unter anderem Darstellungen der Anordnung der Fixierungsanschläge 6 und der Positionsstrahler 8 befinden, die in diesem Falle den Anordnungen dieser Elemente in Figur 4 entsprechen, die zusammengefasst gleichzeitig die Boden- 2 und die Deckenfläche 3 verdeutlicht. Dabei handelt es sich insofern um eine besondere Ausführungsform des Gehäuses 1, als in diesem Falle zwei gegenüberliegende Öffnungsverschlüsse 5 bzw. Verschlussklappen hat, die, wie in Figure 1 dargestellt, zwecks Öffnung in bekannter Weise mittels Lenkern L hochgeschwenkt werden können.

Durch die Anordnung der Fixierungsanschläge 6 und der Positionsstrahler 8 ergibt sich praktisch, dass die Bodenfläche 2 quasi in Aufstellsektoren gegliedert ist, d.h., sowohl die Fixierungsanschläge 6 mit den ihnen zugeordneten Stellungssensoren 7 als auch die Positionsstrahler 8 an der Deckenfläche 3 sind jeweils den Sektoren zugeordnet.

Sofern das Luft-Cargo-Transportgerät bzw. dessen Gehäuse 1 mit einem Temperieraggregat 12 (siehe Figure 1) versehen ist, ist dieses ebenfalls mit der Verarbeitungselektronik 9 und über diese mit dem Display 11 verschaltet.

Zweckmäßig sind auch die Öffnungsverschlüsse 5 bzw. die Stirnseiten der das Gehäuse 1 bildenden Wände mit einem Schließtellungssensor 13 versehen, der via Verabeitungselektronik 9 ebenfalls mit dem Display 11 verschaltet ist.

Im übrigen sind unter Verweis auf Figur 3 die Fixierungsanschläge 6 als in die Bodenfläche des Gehäuses 1 gegen die dort angeordneten Stellungssensoren 7 einschwenkbare Anschläge ausgebildet und zwar bevorzugt und wie dargestellt in Form von beidendig gelagerten Bügeln, in deren Anlenkbereich die Stellungssensoren 7 sitzen.

### Bezugszeichenliste

- 1: Gehäuse
- 2: Bodenfläche
- 3: Deckenfläche
- 4: Seitenwände
- 5: Öffnungsverschluss
- 6: Fixierungsanschlag
- 7: Stellungssensoren
- 8: Positionsstrahler
- 9: Verarbeitungselektronik
- 10: Anzeigegerät
- 11: Display
- 11.1: Anzeigefelder
- 12: Temperieraggregat
- 13: Schließstellungssensor
- TC: Transportcontainer

## Patentansprüche

1. Luft-Cargo-Transportgerät zur Aufnahme von Transportcontainern (TC), umfassend ein wärmeisoliertes, verfahrbares Gehäuse (1), das zwischen einer Boden- (2) und einer Deckenfläche (3) Seitenwände (4) aufweist, von denen mindestens eine in Form eines Öffnungsverschlusses (5) ausgebildet ist, wobei die Bodenfläche (2) mit an die in das Gehäuse (1) eingebrachten Transportcontainern (TC) anschlagbaren und festsetzbaren Fixierungsanschlägen (6) versehen ist,
wobei ferner den Fixierungsanschlägen (6) Stellungssensoren (7) stationär in der Bodenfläche (2) zugeordnet sind, die mit einer Verarbeitungselektronik (9) verschaltet sind und wobei innen an der Deckenfläche (3) gegen die Bodenfläche (2) des Gehäuses (1) gerichtete Positionsstrahler (8) angeordnet und diese ebenfalls mit der Verarbeitungselektronik (9 verschaltet sind.

2. Luft-Cargo-Transprortgerät nach Anspruch 1,
**dadurch gekennzeichnet,**
**dass** die Verarbeitungselektronik (9) in einem außen am Gehäuse (1) befindlichen Anzeigegerät (10) angeordnet ist, das mit einem mit der Verarbeitungselektronik (9) verbundenen Display (11) versehen ist.

3. Luft-Cargo-Transportgerät nach Anspruch 1 oder 2,
**dadurch gekennzeichnet,**
**dass** die Bodenfläche (2) in Aufstellsektoren (11) gegliedert und sowohl die Fixierungsanschläge (6) mit den ihnen zugeordneten Stellungssensoren (7) als auch die Positionsstrahler (8) an der Deckenfläche jeweils den Sektoren zugeordnet sind.

4. Luft-Cargo-Transportgerät nach einem der Ansprüche 1 bis 3,
**dadurch gekennzeichnet,**
**dass** das Display(11) mit der Anzahl der Fixierungsanschläge (6) entsprechenden Anzeigefeldern (11.1) versehen ist.

5. Luft-Cargo-Transportgerät nach einem der Ansprüche 1 bis 4,
wobei das Gehäuse (1) mit einem Temperieraggregat (12) versehen ist,
**dadurch gekennzeichnet,**
**dass** das Temperieraggregat (12) ebenfalls mit der Verarbeitungselektronik (9) und über diese mit dem Display (11) verschaltet ist.

6. Luft-Cargo-Transportgerät nach einem der Ansprüche 1 bis 5,
**dadurch gekennzeichnet,**
**dass** das Gehäuse (1) im Bereich des mindestens einen Öffnungsverschlusses (5) mit einem Schliestellungssensor (13) versehen ist.

7. Luft-Cargo-Transportgerät nach Anspruch 6,
**dadurch gekennzeichnet,**
**dass** der Schließstellungssensor (13) via Verarbeitungselektronik (9) mit dem Display (11) verschaltet ist.

8. Luft-Cargo-Transportgerät nach einem der Ansprüche 1 bis 7,
**dadurch gekennzeichnet,**
**dass** die Fixierungsanschläge (6) als in die Bodenfläche des Gehäuses (1) gegen die dort angeordneten Stellungssensoren (7) einschwenkbare Anschläge ausgebildet sind.

9. Luft-Cargo-Transportgerät nach Anspruch 8,
**dadurch gekennzeichnet,**
**dass** die Fixierungsanschläge (6) in Form von beidendig gelagerten Bügeln ausgebildet sind.
